(19) Europäisches Patentamt
European Patent Office
Office européen des brevets

(11) EP 4 675 738 A1

(12) **EUROPEAN PATENT APPLICATION**

(43) Date of publication:
**07.01.2026 Bulletin 2026/02**

(21) Application number: **25186545.7**

(22) Date of filing: **01.07.2025**

(51) International Patent Classification (IPC):
***H01M 10/0525*** *(2010.01)* ***H01M 50/403*** *(2021.01)*
***H01M 50/417*** *(2021.01)* ***H01M 50/423*** *(2021.01)*
***H01M 50/451*** *(2021.01)* ***H01M 50/489*** *(2021.01)*
***H01M 50/494*** *(2021.01)*

(52) Cooperative Patent Classification (CPC):
**H01M 50/494; H01M 10/0525; H01M 50/403; H01M 50/417; H01M 50/423; H01M 50/451; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.07.2024 KR 20240086221**

(71) Applicant: **SAMSUNG SDI CO., LTD.**
**Yongin-si, Gyeonggi-do 17084 (KR)**

(72) Inventors:
- **Moon, Jung Jin**
  **Suwon-si, Gyeonggi-do 16678 (KR)**
- **Shin, Bo Ra**
  **Suwon-si, Gyeonggi-do 16678 (KR)**
- **Kang, Se Yeong**
  **Suwon-si, Gyeonggi-do 16678 (KR)**
- **Cho, Sang Hyuk**
  **Suwon-si, Gyeonggi-do 16678 (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) The present disclosure related to a separator for a rechargeable lithium battery and a rechargeable lithium battery including the separator, wherein the separator for a rechargeable lithium battery includes a porous substrate, and a coating layer located on at least one surface of the porous substrate, the coating layer includes a binder, the binder includes an aramid-based resin.

FIG. 2

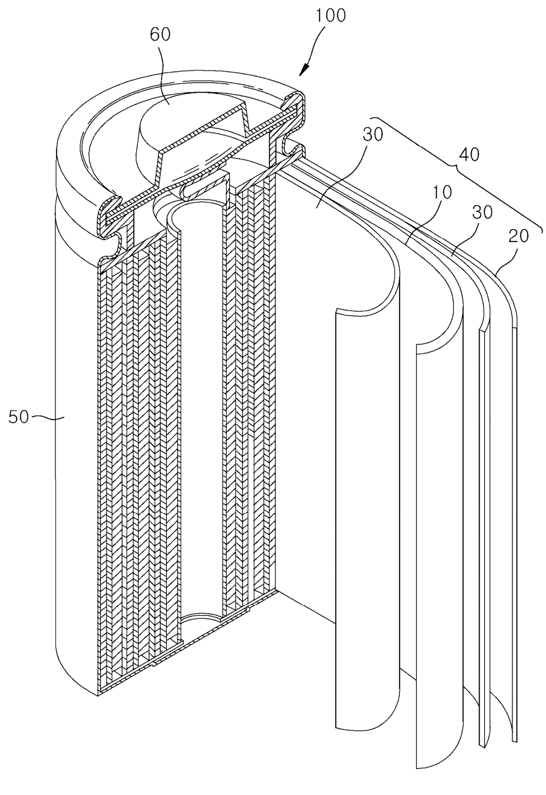


EP 4 675 738 A1

## Description

BACKGROUND

### 1. Field of the Disclosure

The present disclosure relates to a separator for a rechargeable lithium battery, and a rechargeable lithium battery including the separator.

### 2. Discussion of Related Art

With increasing presence of electronic devices that use batteries, such as, e.g., mobile phones, notebook computers, electric vehicles, and the like, the demand for high energy density and high capacity secondary batteries is increasing. Accordingly, improving the performance of lithium secondary batteries may be advantageous.

A rechargeable lithium battery is a battery that includes positive and negative electrodes that include active materials capable of intercalating and deintercalating lithium ions, and an electrolyte, and the rechargeable lithium battery produces electrical energy through oxidation and reduction reactions when lithium ions are intercalated and deintercalated into/from the positive and negative electrodes.

SUMMARY disclosure

One example embodiment includes a separator for a rechargeable lithium battery exhibiting improved impact characteristics.

Another example embodiment includes a rechargeable lithium battery including the separator for a rechargeable lithium battery.

One example embodiment includes a separator for a rechargeable lithium battery including a porous substrate, and a coating layer located on at least one surface of the porous substrate, wherein the coating layer includes a binder, the binder includes an aramid-based resin, and the porous substrate has a value of the following Equation 1 of 100 or more,

Equation 1:

$$\text{(MD tensile strength of porous substrate)/(MD elongation of porous substrate)}$$

In Equation 1, the units of the MD (machine direction) tensile strength of the porous substrate are $kgf/cm^2$ (Pa), and the units of the MD elongation of the porous substrate are %.

Another example embodiment includes a rechargeable lithium battery including a positive electrode, a negative electrode, and a separator for a rechargeable lithium battery located between the positive electrode and the negative electrode.

A separator for a rechargeable lithium battery according to one example embodiment has desired or improved impact characteristics, thereby increasing the reliability of the rechargeable lithium battery.

BRIEF DESCRIPTION OF THE DRAWINGS

The above and other objects, features and advantages of the present disclosure are more apparent to those of ordinary skill in the art by describing example embodiments thereof in detail with reference to the accompanying drawings, in which:

FIG. 1 describes the relationship between a short area (X-axis) and an amount of heat generated (Y-axis) when evaluating the impact characteristics of a separator; and

FIGS. 2 to 5 are cross-sectional views schematically showing a rechargeable lithium battery according to one example embodiment.

DETAILED DESCRIPTION

Hereinafter, example embodiments of the present disclosure are described in detail. However, the embodiments are presented as examples, the present disclosure is not limited thereby, and the present disclosure is only defined by the

scope of the claims to be described below.

Unless otherwise specified herein, when a part such as a layer, film, region, plate, and the like, is described as being "on" another part, the element includes not only the case where the part is "directly on" the other part, but also the case where there is another part therebetween.

Unless otherwise specified in this specification, the singular may also include the plural. Further, unless otherwise stated, "A and/or B" may indicate "including A, including B, or including A and B."

As used herein, the term "a combination thereof" may indicate a mixture, laminate, composite, copolymer, alloy, blend, and reaction product of components.

Unless otherwise defined in the chemical formulas herein, when a chemical bond is not drawn at a position where a chemical bond should be drawn, it indicates that a hydrogen atom is bonded at that position. Also, in chemical formulas, the * symbol indicates a moiety that is connected to the same or different atoms, groups, or structural units.

Unless otherwise specified herein, the term "substitution" indicates that at least one hydrogen atom is substituted with a halogen atom (F, Cl, Br, and I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a C3 to C20 heteroaryl group.

Unless otherwise defined in this specification, a particle diameter is an average particle diameter. Also, the term "particle diameter" refers to the average particle diameter (D50), which means the diameter of particles with a cumulative volume of 50% by volume in the particle size distribution. The average particle diameter (D50) can be measured by methods known to those skilled in the art, for example, by a particle diameter analyzer, a transmission electron micrograph, or a scanning electron micrograph. In another method, an average particle diameter D50 value may be obtained by measuring the particle diameter using a measuring device using dynamic light scattering, performing data analysis to count the number of particles for each particle size range, and then calculating the particle diameter therefrom. Alternatively, the D50 can be measured using laser diffraction. When measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of approximately 28 kHz at an output of 60 W, and the average particle diameter (D50) based on 50% of the particle diameter distribution in the measurement device can be calculated.

A separator for a rechargeable lithium battery according to one example embodiment improves impact characteristics. Improvement of impact characteristics can increase the reliability of lithium secondary batteries when the lithium secondary batteries are exposed to an external physical impact.

The impact characteristics may be improved by hindering or preventing the separator of the rechargeable lithium battery from tearing when the separator is subjected to an external impact. Alternatively, when the separator of the rechargeable lithium battery receives an external impact, since the tearing of the separator is large, the short area is widened, and the current is not concentrated compared to when the short area is narrow, so the heat generation is reduced, and thus the impact characteristics may be improved.

In this regard, the behavior of the separator is explained with reference to FIG. 1.

FIG. 1 describes the relationship between a short area (X-axis) and an amount of heat generated (Y-axis) when evaluating the impact characteristics of a separator.

Referring to FIG. 1, when a rechargeable lithium battery or a separator for a rechargeable lithium battery receives an external impact, the separator may not tear at all, or the separator may tear and cause a short circuit.

Area "A" in FIG. 1 is a case where the impact characteristics are good because the separator does not tear at all.

Area "B" in FIG. 1 is a case where the separator is torn significantly or the separator is torn readily so that the electrode plate comes into contact with the electrolyte over a large area, resulting in a large "short area" and a low amount of heat generated due to the current not being concentrated, and good impact characteristics.

On the other hand, in the case of area "C" in FIG. 1, the separator is torn, but the short area is not sufficient, and the current is relatively concentrated compared to area "B" in FIG. 1, so the amount of heat generated is significantly increased and the impact characteristics are poor.

A separator for a rechargeable lithium battery according to one example embodiment improves impact characteristics by the behavior according to area "B" in FIG. 1. That is, a separator for a rechargeable lithium battery according to one example embodiment can improve the impact characteristics by increasing the separator tear, or by making the separator tear readily.

The separator for a rechargeable lithium battery includes a porous substrate, and a coating layer located on at least one surface of the porous substrate, the coating layer includes a binder, the binder includes an aramid-based resin, and the porous substrate has a value of the following Equation 1 in a range of 100 or more,

Equation 1:

$$(\text{MD tensile strength of porous substrate})/(\text{MD elongation of porous substrate}).$$

In Equation 1, the units of the MD tensile strength of the porous substrate are $kgf/cm^2$, and the units of the MD elongation of the porous substrate are %.

Equation 1 is a criterion that may help determine whether the separator can improve impact characteristics. Equation 1 is a criterion that may help determine whether a separator including a porous substrate can improve impact characteristics by satisfying the impact characteristics, for example the area "B" of FIG. 1. Equation 1 is as a criterion that may help determine whether a separator including an aramid-based resin in a coating layer can improve impact characteristics by satisfying the impact characteristics, for example the area "B" of FIG. 1.

When the value of Equation 1 is in a range of 100 or more, the separator can improve the reliability of the rechargeable lithium battery by improving the impact characteristics. In one example embodiment, the value of Equation 1 may be in a range of 100 to 300, 100 to 250, or 100 to 200. In such cases, it may be possible to ensure the air permeability of the separator.

<u>Coating layer</u>

The value of Equation 1 is a criterion that helps determine whether a separator including an aramid-based resin in a coating layer improves impact characteristics according to area "B" of FIG. 1.

The aramid-based resin is a material with high strength and high heat resistance, and can produce a synergistic effect in terms of strength when combined with the porous substrate described below. In addition, the high heat resistance of the aramid-based resin can contribute to improving the impact characteristics by controlling cell heat generation when heat is generated due to micro-shorts, thereby reducing or preventing the heat from progressing to area "C" of FIG. 1. In addition, the aramid-based resin may be useful for improving the adhesion with the electrode plate when the separator is immersed in an electrolyte, and for providing a synergistic effect with the porous substrate when subjected to an impact.

In one example embodiment, the coating layer includes a binder, and the aramid-based resin of the binder may be included in an amount in a range of 95 wt% or more, for example, 95 wt% to 100 wt%, 98 wt% to 100 wt%, or 100 wt% (i.e., at least 95wt% of the binder is the aramid-based resin).

In one example embodiment, the aramid-based resin may include one or more units of the following Chemical Formulas 1 and 2:

Chemical Formula 1:

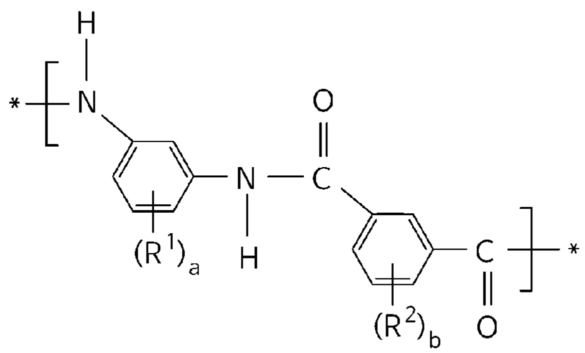

In Chemical Formula 1:

$R^1$ and $R^2$ each independently is a substituted or unsubstituted alkyl group having 1 to 10 carbon atoms, a substituted or unsubstituted aryl group having 6 to 10 carbon atoms, a substituted or unsubstituted cycloalkyl group having 3 to 10 carbon atoms, a substituted or unsubstituted arylalkyl group having 7 to 10 carbon atoms, a hydroxyl group, a halogen, a cyano group, or an amino group, and

a and b are each independently an integer in a range from 0 to 4.

Chemical Formula 2:

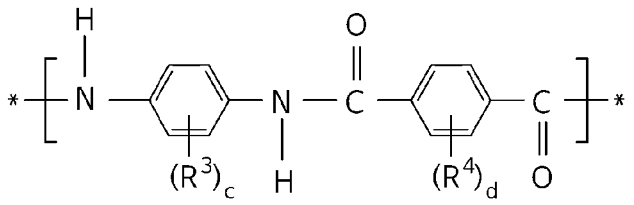

In Chemical Formula 2:
$R^3$ and $R^4$ each independently is a substituted or unsubstituted alkyl group having 1 to 10 carbon atoms, a substituted or unsubstituted aryl group having 6 to 10 carbon atoms, a substituted or unsubstituted cycloalkyl group having 3 to 10 carbon atoms, a substituted or unsubstituted arylalkyl group having 7 to 10 carbon atoms, a hydroxyl group, a halogen, a cyano group, or an amino group, and c and d are each independently an integer in a range from 0 to 4.

In one example embodiment, the coating layer may include a meta-aramid-based resin including a unit of Chemical Formula 1, which shows a meta-aramid-based resin unit. A meta-aramid-based resin including a unit of Chemical Formula 1 can further increase the heat resistance of a separator compared to a para-aramid-based resin containing a unit of Chemical Formula 2.

In one example embodiment, the aramid-based resin may include, for example, at least one of poly(paraphenylene terephthalamide), poly(metaphenyleneisophthalamide), poly(parabenzamide), poly(metabenzamide), poly(4,4'-benzanilide terephthalamide), poly(paraphenylene-4,4'-biphenylene dicarboxylic acid amide), poly(metaphenylene-4,4'-biphenylene dicarboxylic acid amide), poly(paraphenylene-2,6-naphthalene dicarboxylic acid amide), poly(metaphenylene-2,6-naphthalene dicarboxylic acid amide), poly(2-chloroparaphenylene terephthalamide), a paraphenylene terephthalamide/2,6-dichloroparaphenylene terephthalamide copolymer, a metaphenylene terephthalamide/2,6-dichloroparaphenylene terephthalamide copolymer, poly(4,4'-diphenylsulfonylterephthalamide), a paraphenylene terephthalamide/4,4'-diphenylsulfonylterephthalamide copolymer, and the like. Of these, poly(paraphenylene terephthalamide) may also be advantageous.

In one example embodiment, the binder, for example an aramid-based resin, may be included in the coating layer in an amount in a range of 10 wt% to 30 wt%, for example 10 wt% to 20 wt%.

The coating layer may further include a filler in addition to the binder.

The filler may include one or more of an organic filler and an inorganic filler.

In one example embodiment, the organic filler may include a crosslinked polymer filler. The crosslinked polymer filler can lower the moisture content, thereby further reducing the thermal shrinkage rate of the separator and improving insulation properties. The cross-linked polymer filler may be included in a combination of a (meth)acrylic binder and the inorganic filler to reduce the thermal shrinkage rate of the separator.

The inorganic filler may be or include a ceramic material. For example, the inorganic filler may include at least one of a metal oxide, a metalloid oxide, a metal fluoride, a metal hydroxide, or a combination thereof. The first inorganic filler and the second inorganic filler may include at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but are not limited thereto.

The filler may facilitate the improvement of the impact characteristics of the separator by having a substantially small size. In one example embodiment, the filler may have a D50 in a range of 1 nm to 1000 nm, for example, 10 nm to 1000 nm, 10 nm to 100 nm, or 1 nm to 50 nm. In the above range, it is possible to improve strength by being included in the coating layer, and impact characteristics can also be improved.

The filler may have a specific surface area of 50 $m^2/g$ or less, for example, 1 $m^2/g$ to 50 $m^2/g$, or 1 $m^2/g$ to 30 $m^2/g$. Herein, the term "specific surface area" refers to the Brunauer-Emmett-Teller (BET) specific surface area.

The filler may have one or more of plate-shaped, cubic, amorphous, and spherical forms. For example, the filler may have a substantially spherical form. The spherical form may readily implement the effect of the separator.

The filler may be included in the coating layer in an amount in a range of 50 wt% to 99 wt%, 70 wt% to 99 wt%, 75 wt% to 99 wt%, 80 wt% to 99 wt%, 85 wt% to 99 wt%, 90 wt% to 99 wt%, or 95 wt% to 99 wt%. When the filler is included within the above range, desired or improved heat resistance, durability, oxidation resistance and stability may be exhibited.

In one example embodiment, a mass ratio of the binder to the filler included in the coating layer may be in a range of 1:10 to 1:50, for example, 1:20 to 1:30. In the above range, it is possible to implement the effect of the separator, and there may be effects of improving heat resistance and durability.

The thickness of each of, or the thickness of at least one of, the coating layers may be in a range of 0.01 $\mu$m to 20 $\mu$m, 0.1 $\mu$m to 10 $\mu$m, 0.1 $\mu$m to 5 $\mu$m, or 0.5 $\mu$m to 2 $\mu$m.

The ratio of the thickness of the coating layer to the thickness of the porous substrate may range from 0.05 to 0.5, for example, from 0.05 to 0.4, from 0.05 to 0.3, or from 0.1 to 0.2. In the above range, the separator can exhibit desired or improved air permeability, heat resistance, and adhesive strength. Herein, the expression "thickness of the coating layer" indicates the thickness of one coating layer when the coating layer is formed on only one side of the porous substrate, and

indicates the total thickness of two coating layers when the coating layers are formed on both sides of the porous substrate.

Porous substrate

The porous substrate has a large number of pores, and may be applied as a substrate for a separator to facilitate the movement of ions.

The porous substrate has a value of Equation 1 of 100 or more.

According to Equation 1, the MD tensile strength and MD elongation of the porous substrate were considered. This is because when the porous substrate is wound in the MD during cell assembly and tension is applied in the MD, when an impact is received during an impact evaluation, the porous substrate can reduce or prevent energy dissipation and rapid heat generation due to the impact by inducing tearing in the MD direction.

Herein, 'MD' indicates the machine direction of the porous substrate. When the porous substrate is a polyolefin-based resin film, the machine direction (MD) of the porous substrate may be the direction in which the unstretched film is manufactured when the polyolefin-based resin is manufactured by melt extrusion or solution casting.

The MD tensile strength of the porous substrate in Equation 1 may be in a range of 1800 $kgf/cm^2$ to 4000 $kgf/cm^2$, for example, 1800 $kgf/cm^2$ to 3000 $kgf/cm^2$. In the above range, the value of Equation 1 may be readily reached, and it may be possible to improve the strength of the separator.

The MD elongation of the porous substrate in Equation 1 may be 20% or less, for example, 1% to 20% or 10% to 20%. In the above range, the value of Equation 1 may be readily reached, and it may be possible to improve the strength of the separator.

The tensile strength and elongation of the porous substrate may be measured according to the methods described in the experimental example below.

The porous substrate may be a polymer film formed of or including one polymer such as or including at least one of polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more of these.

In one example embodiment, the porous substrate is a polymer film formed of or including a polyolefin, for example, a polyethylene.

The polyolefin-based substrate has a desired or improved shutdown function and can contribute to improving the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin, or may include a copolymer of olefin and non-olefin monomers. In one example embodiment, the polyethylene single film may be readily made to have a ratio of the above-described tensile strength to elongation of 100 or more.

When manufacturing the porous substrate, the porous substrate satisfying a value of 100 or more in Equation 1 can be implemented by controlling the weight average molecular weight, the melting temperature (TM), the stretching temperature and/or the stretching ratio of a polyolefin-based resin used in the porous substrate.

In one example embodiment, the polyolefin-based resin may have a weight average molecular weight of 1 million g/mol or more, for example, 1 million g/mol to 3 million g/mol. In the above range, a value of 100 or more of the ratio in Equation 1 may be readily reached. Herein, the weight average molecular weight may be obtained as a polystyrene conversion value by gel permeation chromatography.

In one example embodiment, the polyolefin-based resin may have a melting temperature (Tm) in a range of 130 °C to 140 °C. In the above range, a value of 100 or more in Equation 1 may be readily reached. The Tm may be obtained by referring to the product catalog of the polyolefin-based substrate, or by a method known to those skilled in the art. For example, the melting temperature may be measured by the following method.

Using a differential scanning calorimeter (DSC, device name: DSC Q20, manufacturer: TA Instruments), the polyethylene composition was heated to 200 °C at 10 °C/min by increasing the temperature (Cycle 1), isothermalized at 200 °C for 1 minute, cooled to 40 °C at 10 °C/min, isothermalized at 40 °C for 1 minute, and then heated again to 200 °C at 10 °C/min (Cycle 2). In a DSC curve thus obtained, the temperature at the maximum point of the endothermic peak was measured as the melting temperature (Tm, °C), and the temperature at the maximum point of the exothermic peak was measured as the crystallization temperature (Tc, °C). At this time, the melting temperature (Tm) and crystallization temperature (Tc) are expressed as the results measured in the second temperature-increasing and decreasing section (Cycle 2), respectively.

The porous substrate may be manufactured by stretching an unstretched film including the polyolefin-based resin using a wet method. For example, the porous substrate may be manufactured by a filler extraction method, but is not

limited thereto. The filler extraction method is to mix the polyolefin-based resin and filler, extract the filler after rolling to form pores, and then manufacture a porous substrate through a stretching process.

In one example embodiment, the stretching temperature may range from 90 °C to 130 °C, for example from 90 °C to 110 °C. In the above range, a value of 100 or more in Equation 1 may be readily reached.

In one example embodiment, the stretching ratio may be in a range of 4 to 10 times, for example 5 to 8 times. In the above range, a value of 100 or more in Equation 1 may be readily reached.

In one example embodiment, the stretching may be performed by the MD and TD (transverse direction) uniaxial stretching, MD and TD biaxial stretching, or the like of the unstretched film.

The porous substrate may have a thickness in a range of 1 μm to 40 μm, for example, 1 μm to 30 μm, 1 μm to 20 μm, or 5 μm to 15 μm.

The thickness of each of, or at least one of, the coating layers may be in a range of 0.01 μm to 20 μm, 0.1 μm to 10 μm, 0.1 μm to 5 μm, or 0.5 μm to 2 μm.

A separator for a rechargeable lithium battery according to one example embodiment of the present disclosure may exhibit desired or improved air permeability, and may have, for example, an air permeability value in a range of 200 sec/100cc or less, for example, 190 sec/100cc or less, or 180 sec/100cc or less. That is, the separator may have a permeability value of less than 40 sec/100cc·1 μm per unit thickness, for example, less than 30 sec/100cc·1 μm, or less than 25 sec/100cc·1 μm. Herein, the term "air permeability" refers to the time (seconds) that takes for 100 cc of air to pass through the unit thickness of the separator. The air permeability per unit thickness may be obtained by measuring the air permeability for the total thickness of the separator and dividing the air permeability by the total thickness. The air permeability may be obtained by measuring the time (seconds) that takes for 100 cc of air to pass through the separator using an air permeability measuring device (Asahi Seiko, EG01-55-1MR).

A separator for a rechargeable lithium battery according to one example embodiment of the present disclosure can exhibit desired or improved puncture strength. The separator may have a puncture strength per thickness of the separator in a range of 150 gf/μm or more, for example, 150 gf/μm to 300 gf/μm.

A separator for a rechargeable lithium battery according to one example embodiment may be formed by applying a composition for forming the above-described coating layer on one side, or on both sides, of a porous substrate, and then drying the porous substrate. The drying may be performed using conventional methods known to those skilled in the art.

## Rechargeable lithium battery

According to one example embodiment, the rechargeable lithium battery includes the separator for a rechargeable lithium battery, a positive electrode, and a negative electrode.

The separator for rechargeable lithium battery refers to the description above. The separator for rechargeable lithium battery may be positioned between the positive electrode and the negative electrode.

## Positive electrode

A positive electrode for a rechargeable lithium battery may include a current collector, and a positive electrode active material layer on the current collector. The positive electrode active material layer may include a positive electrode active material, and may further include a binder and/or a conductive material. For example, the positive electrode may further include an additive that can constitute a sacrificial positive electrode.

## Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included in the positive electrode active material.

The composite oxide may be or include a lithium transition metal composite oxide. Examples of the composite oxide may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, the following compounds represented by any one of the following Chemical Formulas may be included in the composite oxide. $Li_aA_{1-b}X_bO_{2-c}D_e$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_dO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, Ais or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of about 90 wt% to about 99.5 wt% based on 100 wt% of the positive electrode active material layer. Amounts of the binder and the conductive material may be in a range of about 0.5 wt% to about 5 wt%, respectively, based on 100 wt% of the positive electrode active material layer.

The binder attaches the positive electrode active material particles to each other ,and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Examples of the conductive material may include a carbon-based material such as or including at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in the form of a metal powder or a metal fiber; a conductive polymer such as a polyphenylene derivative; or a mixture thereof.

Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated

on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1: 1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are only examples of the present disclosure, and the present disclosure is not limited to the following examples.

**Example 1:**

Alumina (spherical, average particle diameter D50: 50 nm, specific surface area: 40 $m^2/g$) and an aramid-based resin were dispersed in water, and then milled using a bead mill at 25°C for 30 minutes to prepare a dispersion. A composition for a coating layer was prepared by adding water so that the total solid content became 20 wt%. A weight ratio of the aramid resin to the alumina in the composition for a coating layer was 1:20. The aramid-based resin was prepared by polymerizing paraphenylenediamine and terephthalic acid chloride.

A polyethylene film (weight average molecular weight of polyethylene-based resin: 3 million g/mol, Tm: 132 to 136 °C, thickness: 8 μm, MD tensile strength: 2513 $kgf/cm^2$, MD elongation: 13%, manufactured by stretching) was used as a porous substrate. The MD tensile strength and MD elongation of the porous substrate were measured by the following methods, respectively:

MD tensile strength:
The porous substrate was cut into 10 cm × 1 cm pieces in the MD × TD to prepare specimens, the tensile strength was measured by stretching in the MD using a tensile strength measuring equipment (3343, Instron), and the average value for six porous substrate specimens was set as the tensile strength.

MD elongation:
The porous substrate was cut into 10 cm × 1 cm pieces in the MD × TD to prepare specimens, the length of the specimen stretched until it broke by pulling at 100 mm/min in MD at room temperature using Instron (3343, Instron) equipment was measured, and the ratio of the increase compared to the initial specimen length was calculated, and the average value for six porous substrate specimens was set as the elongation.

A separator was manufactured by coating the composition for the coating layer on one surface of the porous substrate using a die-coating method, and then drying at 70 °C for 10 minutes to form a coating layer (thickness: 2 μm).

**Example 2:**

A separator was manufactured in the same manner as in Example 1, with a difference that the polyethylene film in

Example 1 was changed to a polyethylene film having the MD tensile strength and MD elongation shown in Table 1 below. The polyethylene film was manufactured by increasing the stretching temperature compared to the polyethylene film of Example 1.

**Example 3:**

A separator was manufactured in the same manner as in Example 1, with a difference that the polyethylene film in Example 1 was changed to a polyethylene film having the MD tensile strength and MD elongation shown in Table 1 below. The polyethylene film was manufactured by lowering the stretching ratio compared to the polyethylene film of Example 1.

**Comparative Examples 1 to 4**

Separators were manufactured in the same manner as in Example 1, with a difference that in Example 1, the stretching temperature was changed and the polyethylene films shown in Table 1 below were used instead of the polyethylene film.

**Comparative Example 5**

A separator was manufactured in the same manner as in Example 1, with a difference that in Example 1, a nanofiber resin was used instead of the aramid-based resin, and the MD tensile strength and MD elongation of the polyethylene film were changed by changing the stretching temperature as shown in Table 1 below.

The properties below were evaluated for the separators manufactured in the examples and comparative examples, and the results are shown in Table 1 below.

(1) Puncture strength (units: gf/μm): Ten specimens were fabricated by cutting each separator at ten different points with a width (MD) of 50 mm X length (TD) of 50 mm, the specimens were placed over a 10 cm hole using GATO Tech G5 equipment, and the puncture force was measured while pressing with a 1 mm probe. The puncture strength of each specimen was measured three times and then the average value was calculated.

(2) Air permeability (units: sec/100cc): The air permeability was measured by measuring the time (units: seconds) it takes for 100 cc of air to pass through the separator using a measuring device (EG01-55-1MR, Asahi Seiko).
Air permeability measurement device setting conditions:
Measurement pressure: 0.05mPa, Cylinder pressure: 0.4mPa, set time: 5 seconds

(3) Impact evaluation (units: %); This was evaluated using the UN impact evaluation method (dropping a 9.1 kg weight from a certain height to check for explosion and ignition). The proportion of cases in which the impact evaluation passed among the total number of evaluated samples was calculated.

Table 1:

| | MD tensile strength | MD elongation | Coating layer resin | Value of Equation 1 | Puncture strength | Air permeability | Impact evaluation |
|---|---|---|---|---|---|---|---|
| Example 1 | 2513 | 13 | Aramid | 193 | 207 | 167 | 100 |
| Example 2 | 1870 | 17 | Aramid | 110 | 180 | 172 | 90 |
| Example 3 | 2100 | 20 | Aramid | 100 | 182 | 176 | 80 |
| Comparative Example 1 | 2520 | 28 | Aramid | 90 | 230 | 187 | 40 |
| Comparative Example 2 | 2510 | 50 | Aramid | 50 | 224 | 183 | 30 |
| Comparative Example 3 | 2779 | 112 | Aramid | 25 | 639 | 205 | 25 |
| Comparative Example 4 | 1997 | 199 | Aramid | 10 | 422 | 197 | 20 |

(continued)

| | MD tensile strength | MD elongation | Coating layer resin | Value of Equation 1 | Puncture strength | Air permeability | Impact evaluation |
|---|---|---|---|---|---|---|---|
| Comparative Example 5 | 1913 | 17 | Nanofiber | 112 | 211 | 152 | 30 |

As shown in Table 1 above, the separator of the examples has desired or improved impact characteristics, and can increase the reliability of the rechargeable lithium battery.

On the other hand, Comparative Examples 1 to 4 that did not satisfy Equation 1, and Comparative Example 5 that satisfied Equation 1 but had a coating layer that did not contain an aramid-based resin, did not have desired or improved impact characteristics.

## Claims

**1.** A separator (30) for a rechargeable lithium battery (100), the separator comprising:

a porous substrate; and
a coating layer on at least one surface of the porous substrate,
wherein the coating layer includes a binder,
the binder includes an aramid-based resin, and
the porous substrate has a value of Equation 1 of 100 or more,

(machine direction (MD) tensile strength of porous substrate)/(machine direction (MD) elongation of porous substrate); Equation 1:

wherein:

units of the MD tensile strength of the porous substrate are $kgf/cm^2$,
units of the MD elongation of the porous substrate are %, and
the MD tensile strength and the MD elongation are measured as described in Example 1 of the description.

**2.** The separator (30) of claim 1, wherein the porous substrate is a polymer film formed of or comprising a polyolefin.

**3.** The separator (30) of claim 2, wherein the polyolefin is polyethylene.

**4.** The separator (30) of claim 2 or 3, wherein polyolefin has a melting temperature (Tm) in a range of 130 °C to 140 °C measured by differential scanning calorimetry (DSC).

**4.** The separator (30) of any one of the preceding claims, wherein the MD tensile strength of the porous substrate is in a range of 1800 $kgf/cm^2$ to 4000 $kgf/cm^2$, wherein the MD tensile strength is measured as described in Example 1 of the description.

**5.** The separator (30) of any one of the preceding claims, wherein the MD elongation of the porous substrate is 20% or less, wherein the MD elongation is measured as described in Example 1 of the description.

**6.** The separator (30) of any one of the preceding claims, wherein the aramid-based resin is included in an amount of 95 wt% or more of a total weight of the binder.

**7.** The separator (30) of any one of the preceding claims, wherein the aramid-based resin comprises a para-aramid-based resin.

**8.** The separator (30) of any one of the preceding claims, wherein the coating layer comprises one or more of an organic filler and an inorganic filler.

**9.** The separator (30) of claim 8, wherein the filler has a D50 in a range of 1 nm to 1000 nm measured using laser diffraction.

**10.** The separator (30) of claim 8 or 9, wherein the filler has a specific surface area of 50 $m^2/g$ or less.

**11.** The separator (30) of claim 8 or 9, wherein a mass ratio of the binder to the filler included in the coating layer is in a range of 1:10 to 1:50.

**12.** The separator (30) of any one of the preceding claims, wherein:

a thickness of the porous substrate ranges from 5 μm to 15 μm; and
a thickness of the coating layer ranges from 0.5 μm to 2 μm.

**13.** A rechargeable lithium battery (100) comprising:

a positive electrode (10),
a negative electrode (20), and
the separator (30) according to any one of the preceding claims located between the positive electrode (10) and the negative electrode (20).

FIG. 1

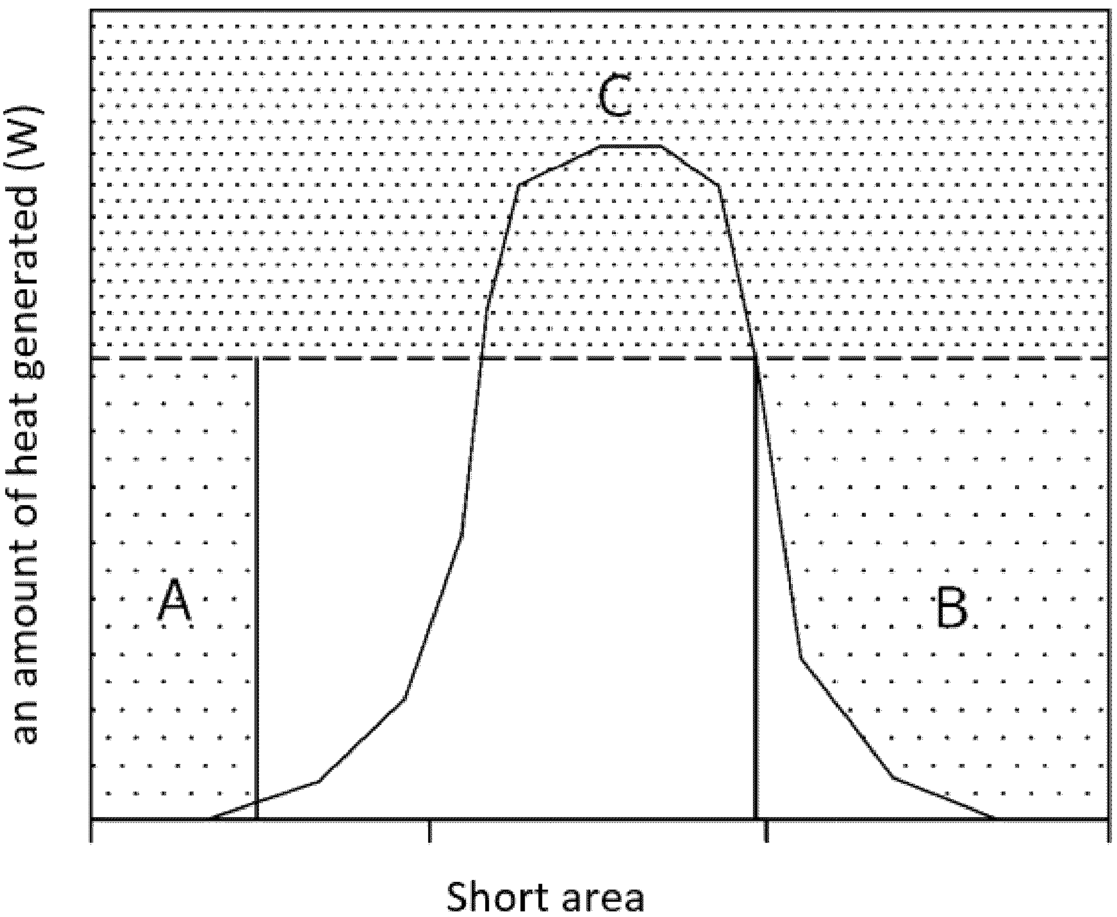

FIG. 2

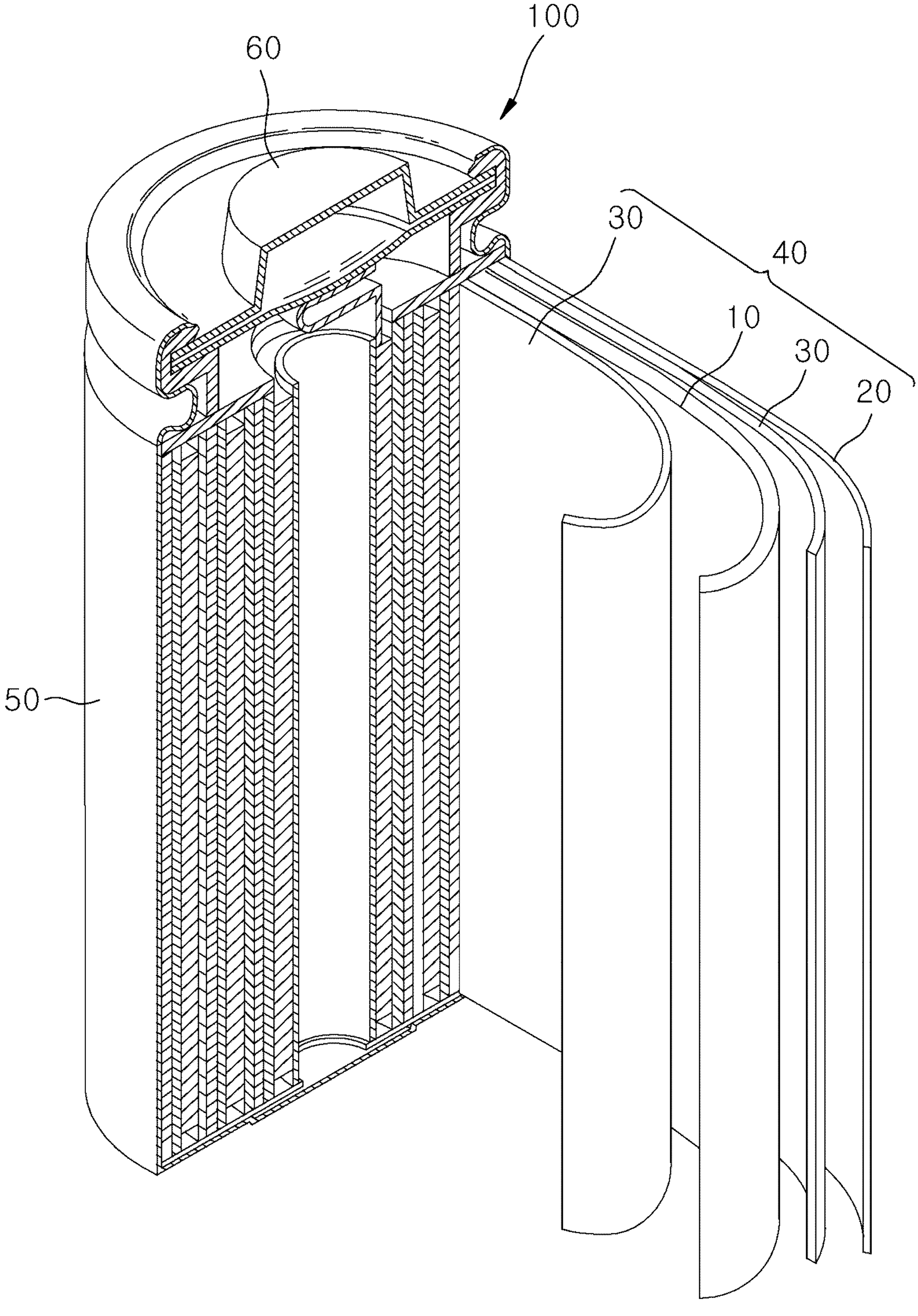

FIG. 3

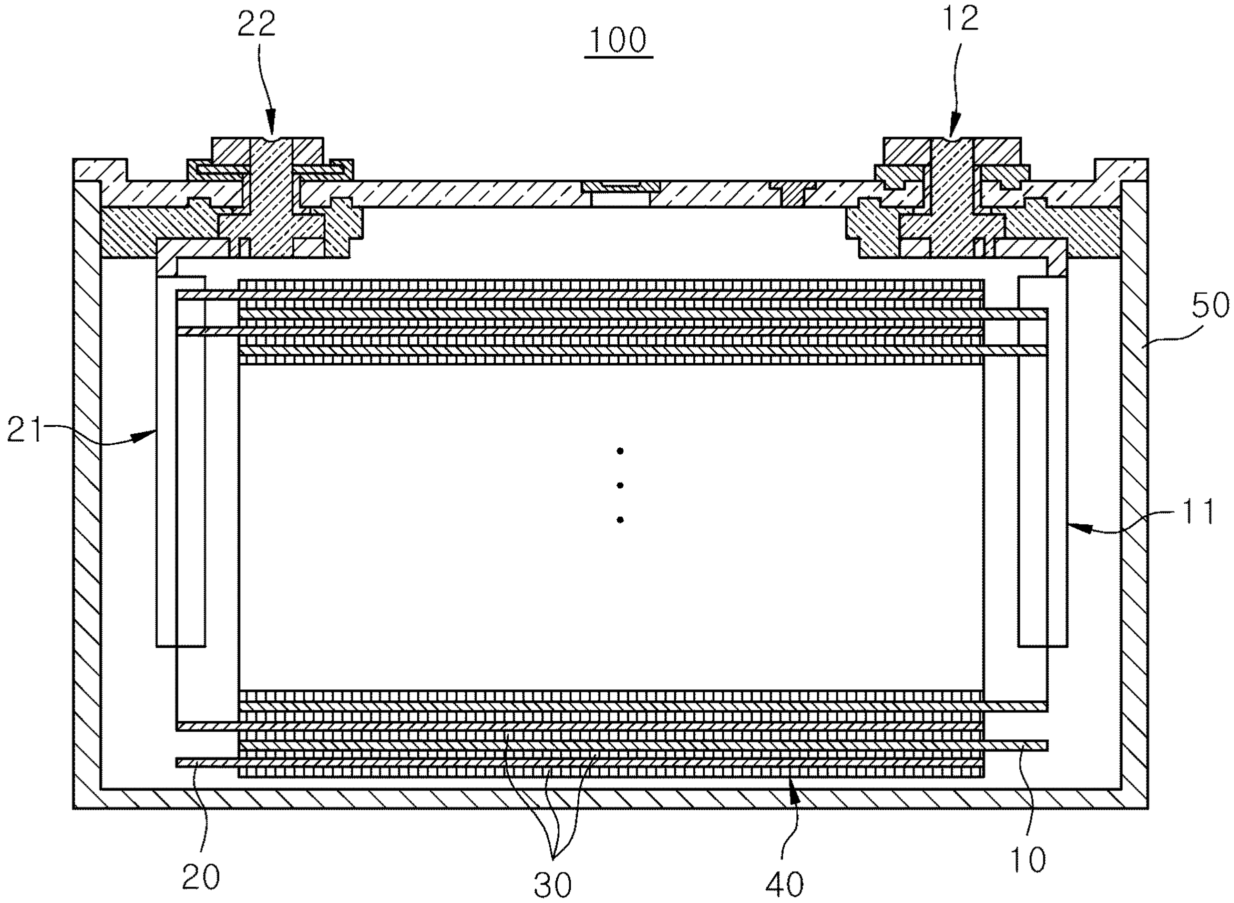

FIG. 4

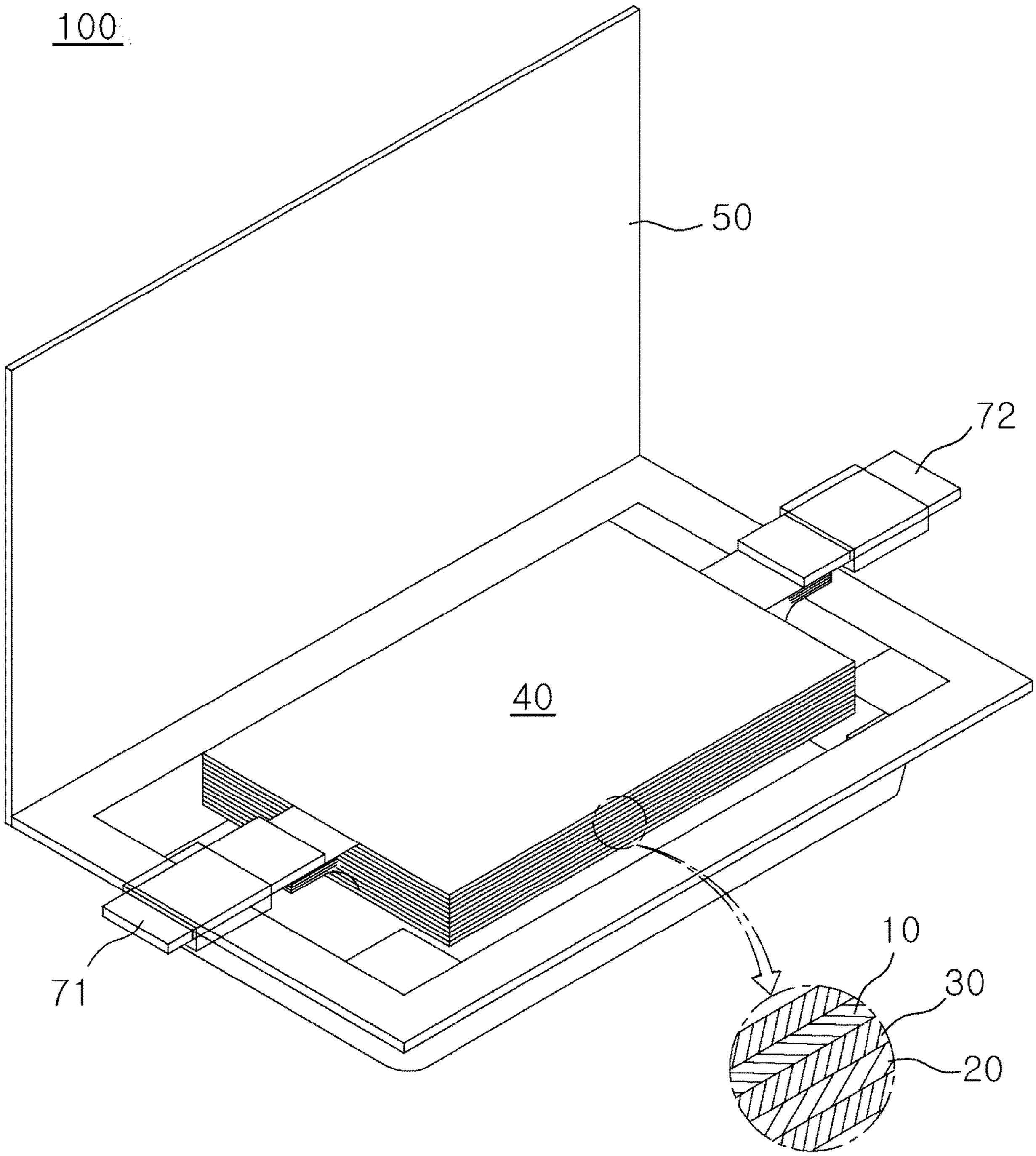

FIG. 5

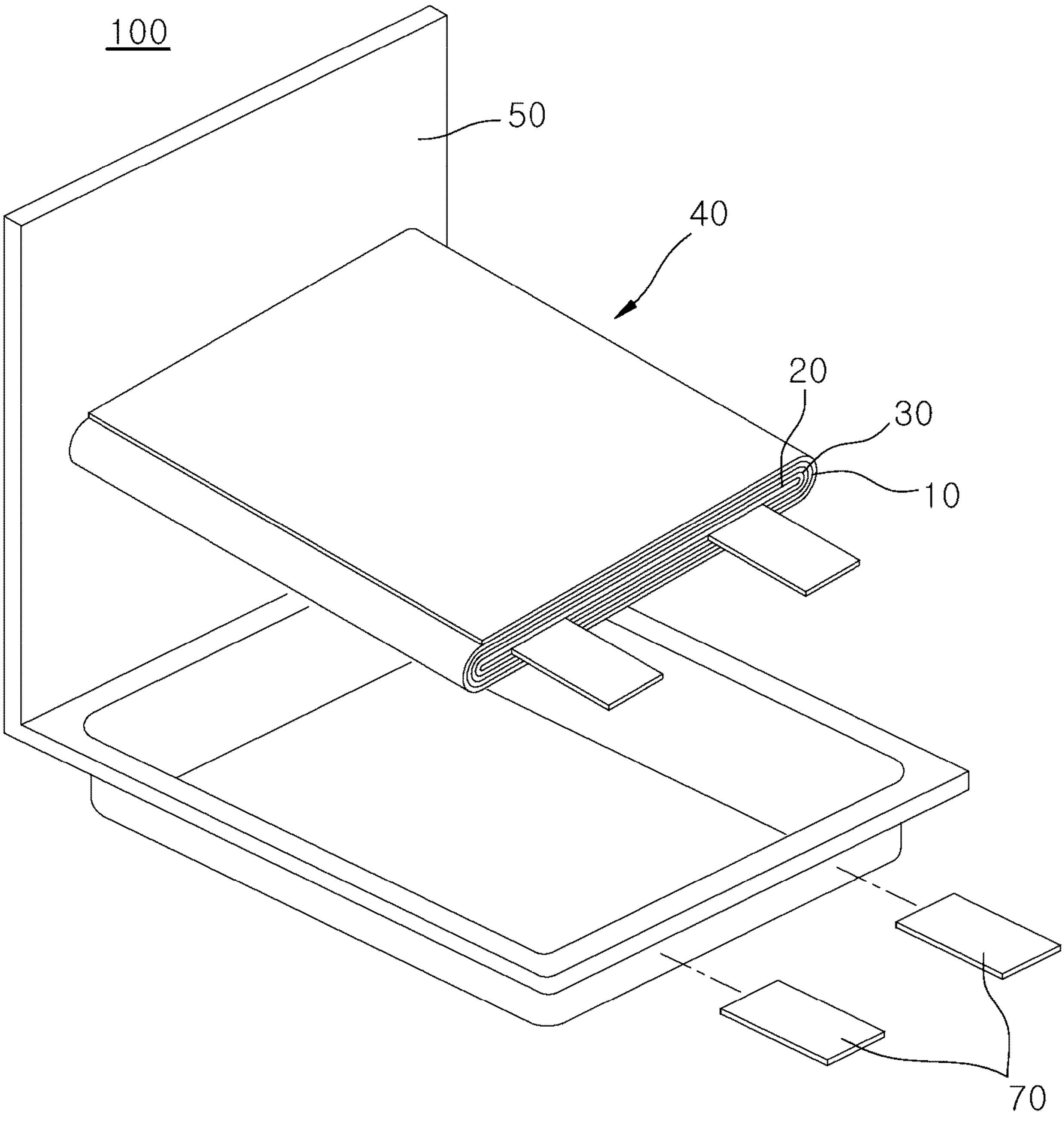

Europäisches Patentamt
European Patent Office
Office européen des brevets

# EUROPEAN SEARCH REPORT

Application Number
EP 25 18 6545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | JP 2023 175458 A (SUMITOMO CHEMICAL CO) 12 December 2023 (2023-12-12)<br>* the cited paragraphs relate to the computer-generated English translation of JP 2023 175458 A;<br>paragraph [0001] - paragraph [0138] *<br>----- | 1-4,6-13<br>5 | INV.<br>H01M10/0525<br>H01M50/403<br>H01M50/417<br>H01M50/423<br>H01M50/451<br>H01M50/489<br>H01M50/494 |
| Y<br>A | WO 2024/001794 A1 (HUAWEI TECH CO LTD [CN]; SHANGHAI ENERGY NEW MAT TECH CO LTD [CN]) 4 January 2024 (2024-01-04)<br>* figures 1-3 *<br>----- | 1-4,6,8,9,12,13<br>5,7,10,11 | |
| Y | EP 4 265 670 A1 (SHANGHAI ENERGY NEW MAT TECH CO LTD [CN])<br>25 October 2023 (2023-10-25)<br>* figures 1-4 *<br>* paragraph [0001] *<br>* paragraph [0005] - paragraph [0082] *<br>----- | 1-4,6-13 | |
| A | HYUN NA KIM, SUNG KEUN LEE: "Effect of particle size on phase transitions in metastable alumina nanoparticles: A view from high-resolution solid-state 27Al NMR study",<br>AMERICAN MINERALOGIST,<br>vol. 98, no. 7, 2013, pages 1198-1210, XP002819910,<br>DOI: https:doi.org.10.2138/am.2013.4364<br>* page 1200 *<br>----- | 9 | TECHNICAL FIELDS SEARCHED (IPC)<br>H01M |

The present search report has been drawn up for all claims

1

| Place of search | Date of completion of the search | Examiner |
|---|---|---|
| Munich | 5 November 2025 | Zimmermann, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 6545

This annex lists the patent family members relating to the patent documents cited in the above-mentioned European search report. The members are as contained in the European Patent Office EDP file on The European Patent Office is in no way liable for these particulars which are merely given for the purpose of information.

05-11-2025

| Patent document cited in search report | Publication date | Patent family member(s) | Publication date |
|---|---|---|---|
| JP 2023175458 A | 12-12-2023 | NONE | |
| WO 2024001794 A1 | 04-01-2024 | CN 117352963 A | 05-01-2024 |
| | | WO 2024001794 A1 | 04-01-2024 |
| EP 4265670 A1 | 25-10-2023 | CN 112592500 A | 02-04-2021 |
| | | EP 4265670 A1 | 25-10-2023 |
| | | JP 7724856 B2 | 18-08-2025 |
| | | JP 2023548238 A | 15-11-2023 |
| | | KR 20230124890 A | 28-08-2023 |
| | | US 2023395936 A1 | 07-12-2023 |
| | | WO 2022127224 A1 | 23-06-2022 |

EPO FORM P0459

For more details about this annex : see Official Journal of the European Patent Office, No. 12/82